# EUROPÄISCHE PATENTSCHRIFT

(11) **EP 3 514 333 B1**
(45) Veröffentlichungstag und Bekanntmachung des Hinweises auf die Patenterteilung: **16.06.2021**
(21) Anmeldenummer: 19152146.7
(22) Anmeldetag: 16.01.2019
(51) Int. Cl.: F01D 5/22, F01D 11/08, F01D 11/12

(54) **ROTORSCHAUFELDECKBAND FÜR EINE STRÖMUNGSMASCHINE, ROTORSCHAUFEL, VERFAHREN ZUM HERSTELLEN EINES ROTORSCHAUFELDECKBANDS UND EINER ROTORSCHAUFEL**
ROTOR BLADE TIP SHROUD FOR A TURBO MACHINE, ROTOR BLADE, METHOD FOR PRODUCING A ROTOR BLADE COVER STRIP AND A ROTOR BLADE
CARÉNAGE D'EXTRÉMITÉ D'AUBE DE ROTOR POUR UNE TURBOMACHINE, AUBE DE ROTOR, PROCÉDÉ DE FABRICATION D'UN CARÉNAGE D'EXTRÉMITÉ D'AUBE DE ROTOR ET AUBE DE ROTOR

(30) Priorität: 23.01.2018 DE 102018200964
(43) Veröffentlichungstag der Anmeldung: 24.07.2019
(73) Patentinhaber: MTU Aero Engines AG, 80995 München (DE)
(72) Erfinder: Gier, Jochen, 85757 Karlsfeld (DE)

(56) Entgegenhaltungen:
- EP-A2- 2 955 243
- WO-A1-2017/222518
- US-A- 3 844 011

## Beschreibung

Die vorliegende Erfindung betrifft ein Rotorschaufeldeckband einer Rotorschaufel für eine Strömungsmaschine gemäß Anspruch 1, ferner eine Rotorschaufel gemäß Anspruch 12, zwei Verfahren zum Herstellen eines Rotorschaufeldeckbands nach den Ansprüchen 13 und 14 sowie ein Verfahren zum Herstellen einer Rotorschaufel nach Anspruch 15.

Aus der Praxis sind Rotorschaufeln für Strömungsmaschinen bekannt, die Deckbänder mit Dichtspitzen aufweisen. Diese Deckbänder sollen unter anderem verhindern, dass das die Strömungsmaschine durchströmende Medium zwischen dem Deckband und dem angrenzenden Gehäuse vorbeiströmt. Derartige Leckageströmungen können beispielsweise den Wirkungsgrad der Strömungsmaschine verringern.

Deckbänder von Rotorschaufeln von Strömungsmaschinen können aufgrund hoher Zentrifugalbelastungen bei hohen Drehzahlen oft Versteifungsstrukturen aufweisen. Die konstruktive Ausgestaltung dieser Versteilungsstrukturen ist unterschiedlich. Beispielsweise können die Dichtspitzen mit Versteifungsstrukturen versehen sein. Beispiele für verschiedene Versteifungsstrukturen mit Rippen und Vertiefungen sind aus der DE102009030566A1 bekannt. Aus der US20030228223A1 und der JP H08 28 303 A sind gekühlte Schaufeln mit Kühlkanälen innerhalb der Deckbänder bekannt. Die Kühlkanäle werden von einem Kühlmedium durchströmt und stehen mit der äußeren Schaufelumgebung sowie mit inneren Zuführungskanälen in Fluidverbindung. Aus der WO2017222518A1 ist ein Rotordeckband aus einem Verbundwerkstoff mit einer keramischen Matrix bekannt.

Eine Aufgabe der vorliegenden Erfindung ist es, ein weiteres Rotorschaufeldeckband für eine Strömungsmaschine vorzuschlagen. Eine weitere Aufgabe der vorliegenden Erfindung ist es, eine Rotorschaufel, zwei Verfahren zum Herstellen eines Rotorschaufeldeckbands sowie ein Verfahren zum Herstellen einer Rotorschaufel vorzuschlagen.

Die erfindungsgemäße Aufgabe wird durch ein Rotorschaufeldeckband einer Strömungsmaschine mit den Merkmalen des Anspruchs 1 gelöst. Ferner wird die erfindungsgemäße Aufgabe durch eine Rotorschaufel mit den Merkmalen des Anspruchs 12, durch zwei Verfahren zum Herstellen eines Rotorschaufeldeckbands mit den Merkmalen der Ansprüche 13 und 14 sowie durch ein Verfahren zum Herstellen einer Rotorschaufel mit den Merkmalen des Anspruchs 15 gelöst.

Erfindungsgemäß wird ein Rotorschaufeldeckband für eine Strömungsmaschine vorgeschlagen, das wenigstens eine Dichtspitze bzw. eine oder mehrere Dichtspitzen und eine an die Dichtspitze angrenzende Stützstruktur umfasst. Die Stützstruktur weist wenigstens einen Zwischenbereich auf, in dem wenigstens ein Struktursegment angeordnet ist. Die nach radial außen angeordnete Oberfläche der Stützstruktur und des Struktursegments bilden eine im wesentlichen planare Oberfläche aus. Die Radialrichtung ist auf die Rotationsachse der Strömungsmaschine bezogen.

Die erfindungsgemäße Rotorschaufel für eine Strömungsmaschine umfasst ein Rotorschaufeldeckband, das wenigstens eine Dichtspitze und eine an die Dichtspitze angrenzende Stützstruktur aufweist. Die Stützstruktur weist wenigstens einen Zwischenbereich auf, in dem wenigstens ein Struktursegment angeordnet ist. Die nach radial außen angeordnete Oberfläche der Stützstruktur und des Struktursegments bilden eine im wesentlichen planare Oberfläche aus.

In einigen erfindungsgemäßen, beispielhaften Ausführungsformen ist die erfindungsgemäße Rotorschaufel generativ hergestellt. Eine generativ hergestellte Rotorschaufel kann als einstückige Rotorschaufel bezeichnet werden.

Ein generatives Herstellungsverfahren kann als additives Herstellungsverfahren, Fertigungsverfahren oder als Rapid Prototyping bezeichnet werden. Ein generatives Herstellungsverfahren ist beispielsweise das selektive Lasersinterverfahren (SLS), das selektive Laserschmelzverfahren (SLM) oder das Kaltgasspritzverfahren.

Ein erstes erfindungsgemäßes Verfahren zum Herstellen eines Rotorschaufeldeckbands für eine Strömungsmaschine umfasst als ersten Schritt ein Bereitstellen eines Rotorschaufeldeckbands, das wenigstens eine Dichtspitze und eine an die Dichtspitze angrenzende Stützstruktur aufweist. Die Stützstruktur weist wenigstens einen Zwischenbereich auf. In einem zweiten Verfahrensschritt wird wenigstens ein Struktursegment hergestellt. Das Struktursegment wird insbesondere mittels eines generativen Fertigungsverfahrens hergestellt. In einem dritten Verfahrensschritt wird das wenigstens eine Struktursegment in den Zwischenbereich der Stützstruktur eingefügt, so dass eine nach radial außen angeordnete Oberfläche der Stützstruktur und des Struktursegments eine im wesentlichen planare Oberfläche ausbildet.

Ein zweites erfindungsgemäßes Verfahren zum Herstellen eines Rotorschaufeldeckbands für eine Strömungsmaschine umfasst nur einen Verfahrensschritt, in dem das Rotorschaufeldeckband mittels eines generativen Fertigungsverfahrens hergestellt wird. Das Rotorschaufeldeckband umfasst in diesem einstufigen Verfahrensschritt sowohl das Herstellen der Stützstruktur mit der wenigstens einen Dichtspitze als auch das Herstellen Struktursegments, das im Zwischenbereich angeordnet ist. Es können unterschiedliche Materialien zum Einsatz kommen, beispielsweise für das Rotorschaufeldeckband ein erstes Material und für das Rotorschaufelblatt ein zweites Material.

Ein weiteres Verfahren zum Herstellen einer Rotorschaufel für eine Strömungsmaschine umfasst einen Fertigungsschritt, der mittels eines generativen Fertigungsverfahrens ausgeführt wird. Die Rotorschaufel umfasst ein erfindungsgemäßes Rotorschaufeldeckband für eine Strömungsmaschine, das wenigstens eine Dichtspitze und eine an die Dichtspitze angrenzende Stützstruktur umfasst. Die Stützstruktur weist wenigstens einen Zwischenbereich auf, in dem wenigstens ein Struktursegment angeordnet ist. Die nach radial außen angeordnete Oberfläche der Stützstruktur und des Struktursegments bilden eine im wesentlichen planare Oberfläche aus.

Vorteilhafte Weiterentwicklungen der vorliegenden Erfindung sind jeweils Gegenstand von Unteransprüchen und Ausführungsformen.

Erfindungsgemäße beispielhafte Ausführungsformen können eines oder mehrere der im Folgenden genannten Merkmale aufweisen.

Das erfindungsgemäße Rotorschaufeldeckband kann ein Rotorschaufeldeckbandsegment sein oder als ein solches bezeichnet werden. Ein Rotorschaufeldeckbandsegment kann ein Segment eines Rotorschaufeldeckbands sein, das für eine einzelne Rotorschaufel vorgesehen ist. Mehrere Rotorschaufeln können über einem Umfang zu einem Rotor zusammengefügt werden. Wenn mehrere Rotorschaufeln mit Rotorschaufeldeckbandsegmenten zu einem Rotor mit einem Deckband zusammengefügt werden, kann dies zu einem geschlossenen Deckband über dem gesamten Umfang des Rotors führen.

Ein Rotor kann eine Rotorstufe umfassen oder als Rotorstufe bezeichnet werden. Ein Rotor kann als Laufrad bezeichnet werden.

Vereinfachend wird im Folgenden der Begriff Rotorschaufeldeckband synonym zu dem Begriff Deckband verwendet. Ein Deckband kann ein Deckbandsegment sein, insbesondere ein Deckbandsegment für eine Rotorschaufel.

In einigen erfindungsgemäßen, beispielhaften Ausführungsformen ist das erfindungsgemäße Deckband für eine Gasturbine vorbereitet und ausgestaltet. In einigen erfindungsgemäßen, beispielhaften Ausführungsformen ist das erfindungsgemäße Deckband für eine Dampfturbine vorbereitet und ausgestaltet.

Eine Gasturbine kann ein Flugtriebwerk sein. Ein Flugtriebwerk kann als Strahltriebwerk bezeichnet werden.

Eine Dichtspitze eines Deckbands kann als Dichtfin bezeichnet werden. Dichtspitzen können gegen wabenförmige Dichtungen in einem Gehäuse der Strömungsmaschine streifen bzw. einlaufen. Die Dichtungen können als Anstreifdichtungen, Anstreifbeläge, Einlaufbeläge oder Einlaufdichtungen bezeichnet werden. Die Dichtspitzen können stegförmig ausgebildet sein.

In einigen erfindungsgemäßen, beispielhaften Ausführungsformen ist die an die Dichtspitze angrenzende Stützstruktur mit der Dichtspitze verbunden. Die Dichtspitze und die Stützstruktur können einteilig in einem Fertigungsschritt hergestellt werden, beispielsweise mittels eines Urformverfahrens und/oder eines Umformverfahrens (Metallgussverfahren, Schmiedeverfahren etc.). Ein einteilig hergestelltes Bauteil mit einer Dichtspitze und einer Stützstruktur kann mittels verschiedener Bearbeitungsverfahren nachbearbeitet werden. Beispielsweise können Bohrungen für Löcher und Aussparungen, Endmaßbearbeitungen etc. mittels materialabtragender Verfahren am Bauteil erfolgen. Ebenso kann das gesamte Bauteil oder einzelne Abschnitte des Bauteils gehärtet werden. Weiterhin können Beschichtungen erfolgen, beispielsweise am gesamten Bauteil, oder an einzelnen Abschnitten. Die Beschichtungen können je nach Bauteilabschnitt unterschiedlich sein. Beispielsweise kann der Bereich der Dichtspitze, der im Einsatz in eine Einlaufdichtung am Gehäuse eingreifen soll, beschichtet werden. Alternativ kann die Dichtspitze und die Stützstruktur zweiteilig oder mehrteilig hergestellt werden. Bei einer mehrteiligen Herstellungsweise können die einzelnen Teile insbesondere mittels eines Fügeverfahrens, beispielsweise mittels Schweißen oder Löten, miteinander verbunden werden. Die verbundenen Teile können endbearbeitet werden, beispielsweise mittels Härten, Schleifen etc.

In einigen erfindungsgemäßen, beispielhaften Ausführungsformen ist die an die Dichtspitze angrenzende Stützstruktur ein massiver Bereich, der außerhalb der Dichtspitze angeordnet ist. Ein massiver Bereich ist insbesondere ein Bereich ohne Hohlstrukturen bzw. Hohlräume innerhalb des massiven Bereichs. Die Stützstruktur kann zur Versteifung des Rotorschaufeldeckbands vorgesehen und ausgestaltet sein. Eine Stützstruktur kann gitterförmig, wabenförmig, regelmäßig oder unregelmäßig ausgebildet sein. Die Stützstruktur kann unterschiedliche Wandstärken und/oder unterschiedliche Aussparungen bzw. Löcher aufweisen.

Eine Stützstruktur kann als Strukturabschnitt bezeichnet werden.

In einigen erfindungsgemäßen, beispielhaften Ausführungsformen weist die Stützstruktur wenigstens einen Zwischenbereich auf, in dem wenigstens ein Struktursegment angeordnet ist, wobei das Struktursegment an die Stützstrukturen angrenzt oder mit den Stützstrukturen verbunden ist. Das Struktursegment kann beispielsweise reibschlüssig und/oder formschlüssig in dem Zwischenbereich fixiert und mit der Stützstruktur verbunden sein. Ebenso kann das Struktursegment alternativ oder ergänzend materialschlüssig mit der Stützstruktur in dem Zwischenbereich fixiert bzw. befestigt sein. Eine materialschlüssige Verbindung ist beispielsweise eine Klebverbindung, eine Lötverbindung oder eine Schweißverbindung.

Ein Zwischenbereich in der Stützstruktur kann eine Aussparung, eine Öffnung, ein Loch oder ähnliches sein. Der Zwischenbereich kann gußtechnisch, schmiedetechnisch oder anders hergestellt sein. Der Zwischenbereich kann spanabhebend, beispielsweise mittels Fräsen oder Bohren, hergestellt sein.

In einigen erfindungsgemäßen, beispielhaften Ausführungsformen ist die im Wesentlichen planare Oberfläche der nach radial außen angeordneten Oberfläche der Stützstruktur und des Struktursegments eine im Wesentlichen ebene Oberfläche. Eine planare Oberfläche oder eine ebene Oberfläche kann eine glatte Oberfläche sein. Eine im Wesentlichen planare Oberfläche kann vorteilhaft lokale Strömungsablösungen, Strömungsabrißkanten, Verwirbelungen oder andere Beeinflussungen der Strömungen vermeiden oder zumindest verringern. Dies kann zu geringeren Strömungsverlusten, einer geringeren Temperaturerhöhung in der Strömung und einem verbesserten Wirkungsgrad führen gegenüber Oberflächen, die nicht oder im Wesentlichen nicht planar sind.

In einigen erfindungsgemäßen Ausführungsformen ist die nach radial außen weisende Oberfläche des Rotorschaufeldeckbandes außerhalb der einen oder mehreren Dichtspitzen einschließlich der genannten im Wesentlichen planaren Oberfläche glatt, konturlos, unstrukturiert, vertiefungs- und erhebungslos und/oder geschlossen. Dadurch kann eine Wirbelbildung und ein damit einhergehender Wirkungsgradverlust besonders vorteilhaft vermieden oder zumindest reduziert werden.

In einigen erfindungsgemäßen Ausführungsformen umfassen die Stützstruktur und das Struktursegment dasselbe Material und sind insbesondere integral miteinander, beispielsweise gemeinsam integral additiv, ausgebildet. Dies gestattet eine, insbesondere hinsichtlich hoher Fliehkraftbelastungen, besonders stabile Bauweise.

In einigen erfindungsgemäßen, beispielhaften Ausführungsformen ist die Stützstruktur aus einem ersten Material hergestellt ist oder weist ein erstes Material auf, wobei das Struktursegment aus einem zweiten Material hergestellt ist oder ein zweites Material aufweist. Das erste Material und das zweite Material können gleich oder unterschiedlich sein. Beispielsweise kann die Stützstruktur aus einem metallischen Material und das Strukturelement aus dem gleichen, aus einem ähnlichen oder aus einem anderen Material hergestellt sein. Ein metallisches Material kann rein exemplarisch eine Nickelbasislegierung und/oder eine Titanlegierung sein.

In einigen erfindungsgemäßen, beispielhaften Ausführungsformen weist die Stützstruktur wenigstens zwei Zwischenbereiche auf, in denen wenigstens zwei Struktursegmente angeordnet sind. Die Stützstrukturen können derart angeordnet sein, dass die Struktursegmente nicht aneinander grenzen, also das die Struktursegmente durch die Stützstrukturen räumlich voneinander getrennt sind. Dadurch kann vorteilhaft eine hohe Stabilität erreicht werden, beispielsweise hinsichtlich einer hohen Verwindungssteifigkeit der Stützstruktur nach Einbringen der Struktursegmente in die Zwischenbereiche. Die Stabilität des Deckbands kann nach Einbringen der Struktursegmente in die Zwischenbereiche erhöht werden.

In einigen erfindungsgemäßen, beispielhaften Ausführungsformen ist die Dichtspitze oder die Stützstruktur massiv ausgebildet. Ebenso können die Dichtspitze und die Stützstruktur massiv ausgebildet sein. Eine massive Ausbildung kann insbesondere bedeuten, dass keine Hohlstrukturen in den Bauteilen vorhanden sind. Als Hohlstrukturen werden in diesem Zusammenhang nach außen (bezogen auf das massive Bauteil) offene und/oder geschlossene Hohlstrukturen verstanden. Geschlossene Hohlstrukturen können eingeschlossene Kavitäten, Blasen, Hohlräume etc. im Bauteil sein. Offene Hohlstrukturen können Bohrungen von außen in das Bauteil sein. Geschlossene und/oder offene Hohlstrukturen können grundsätzlich zur Gewichtsreduzierung eines Bauteils eingesetzt werden.

In einigen erfindungsgemäßen, beispielhaften Ausführungsformen umfasst das Deckband wenigstens zwei Dichtspitzen, wobei die Stützstruktur zwischen den Dichtspitzen angeordnet ist. Die Dichtspitzen können im Wesentlichen parallel zueinander angeordnet sein. Die Dichtspitzen können sich in ihrer Längsausrichtung über den gesamten Umfang erstrecken, also über alle Rotorschaufeln einer Rotorstufe bzw. eines Laufrads.

In einigen erfindungsgemäßen, beispielhaften Ausführungsformen ist die Stützstruktur rippenförmig ausgebildet. Eine rippenförmige Stützstruktur kann gitterförmig oder netzförmig sein. Die Zwischenräume der rippenförmigen Stützstruktur können als Zwischenbereiche bezeichnet werden.

In einigen erfindungsgemäßen, beispielhaften Ausführungsformen weist wenigstens ein Struktursegment eine Hohlstruktur auf. Als Hohlstrukturen des Struktursegments werden nach außen (bezogen auf das Struktursegment) offene und/oder geschlossene Hohlstrukturen verstanden. Geschlossene Hohlstrukturen können eingeschlossene Kavitäten, Blasen, Hohlräume etc. im Struktursegment sein. Die nach außen geschlossenen Hohlstrukturen können innerhalb des Struktursegments einzeln geschlossen sein oder mit anderen Hohlstrukturen verbunden sein. Dies kann als teilweise oder vollständige innere Hohlstruktur bezeichnet werden. Die jeweilige Ausführung einer inneren Hohlstruktur kann unter anderem von dem Herstellverfahren des Struktursegment abhängen. Die Hohlstrukturen können vorteilhaft das Gewicht des Struktursegments gegenüber einem massiven Struktursegment verringern.

Dementsprechend kann das oder alle Struktursegment(e) eine geringere Dichte als die Stütz struktur aufweisen.

In einigen erfindungsgemäßen, beispielhaften Ausführungsformen weist die Dichtspitze eine senkrecht zur Umfangsrichtung ausgerichtete, konstante Breite über dem Umfang auf. Die Umfangsrichtung ist bezogen auf die Rotationsrichtung der Rotorschaufel. Eine konstante Breite über dem Umfang kann vorteilhaft sein, um die Dichtwirkung eines Spalts zwischen der Dichtspitze des Deckbands und einer Einlaufdichtung des Gehäuses zu optimieren bzw. eine Leckageströmung zwischen der Dichtspitze und der Einlaufdichtung zu minimieren.

In einigen erfindungsgemäßen, beispielhaften Ausführungsformen ist eine zweite Dichtspitze stromab einer ersten Dichtspitze und gegenüber der ersten Dichtspitze radial versetzt nach außen angeordnet. Diese rein exemplarische Anordnung der Dichtspitzen eines Deckbandes kann insbesondere bei Laufschaufeln gewählt werden, die in Niederdruckturbinen von Flugtriebwerken anwendbar sind.

In einigen erfindungsgemäßen, beispielhaften Ausführungsformen sind die erste Dichtspitze und die zweite Dichtspitze in ihrer Längsausrichtung im Wesentlichen parallel zueinander angeordnet.

In einigen erfindungsgemäßen, beispielhaften Ausführungsformen bildet die nach radial außen angeordnete Oberfläche der Stützstrukturen und der weiteren Strukturbereiche eine im wesentlichen planare Oberfläche über dem gesamten Umfang aus.

Manche oder alle erfindungsgemäßen Ausführungsformen können einen, mehrere oder alle der oben und/oder im Folgenden genannten Vorteile aufweisen.

Mittels des erfindungsgemäßen Rotorschaufeldeckbands kann vorteilhaft der Wirkungsgrad der Strömungsmaschine erhöht werden. Ohne das erfindungsgemäße Rotorschaufeldeckband kann ein permanenter Impulsaustausch zwischen dem Deckband und einer gehäuseseitigen Einlaufdichtung stattfinden. Dieser permanente Impulsaustausch kann eine erhöhte Reibleistung in der Strömung verursachen. Die Strömung zwischen dem Deckband und der Einlaufdichtung kann Leckageströmung genannt werden oder ein Teil einer Leckageströmung sein bzw. ausbilden. Dieser Impulsaustausch kann insbesondere durch Kanten von Versteifungsrippen des Deckbands verursacht werden, die zu lokalen Strömungsablösungen, Verwirbelungen und lokalen Turbulenzen führen können. Diese Strömungsphänomene können den Rotor abbremsen. Ferner können diese Strömungsphänomene zu einer sogenannten Ausmischung der Strömung führen, die die Entropie der Leckageströmung erhöhen und damit den Wirkungsgrad verschlechtern bzw. die Wirkungsgradverluste erhöhen. Mittels des erfindungsgemäßen Rotorschaufeldeckbands, das eine nach radial außen im Wesentlichen planare Oberfläche der Stützstruktur und des Struktursegments ausbildet, können diese Strömungsphänomene zumindest reduziert werden, indem die Strömung entlang dieser im Wesentlichen planaren Oberfläche weniger gestört wird. Die Strömungsablösungen, Verwirbelungen und lokalen Turbulenzen können dadurch zumindest reduziert werden. Die im Wesentlichen planare Oberfläche ist eine umfangssymmetrische Oberflächenkontur. Daher können mittels des erfindungsgemäßen Rotorschaufeldeckbands die Wirkungsgradverluste in der Strömung, insbesondere in der Leckageströmung reduziert werden. Die genannten Strömungsphänomene können insbesondere bei hohen Umfangsgeschwindigkeiten des Deckbandes, also bei hohen Drehzahlen und/oder großen Außendurchmessern, relevante Effekte bezüglich des Wirkungsgrades aufzeigen.

Weiterhin können mittels des erfindungsgemäßen Rotorschaufeldeckbands vorteilhaft mögliche Temperaturerhöhungen in der Leckageströmung, die durch die oben genannten Strömungsphänomene auftreten, reduziert werden. Erhöhte Temperaturen in der Leckageströmung können sich, insbesondere bei engen Radialspalten zwischen dem Rotor und dem angrenzenden Gehäuse, auf angrenzende Bauteile, beispielsweise auf Gehäusebauteile, nachteilig auswirken. Erhöhte Temperaturen können beispielsweise zu Verformungen von angrenzenden Bauteilen führen, was insbesondere bei schnelllaufenden Turbinen zu Bauteilschäden führen kann.

Mittels des erfindungsgemäßen Rotorschaufeldeckbands kann vorteilhaft eine strömungsverluststeigernde Wirkung eines sogenannten "Pumpens" des Fluids in der Leckageströmung in die Einlaufdichtung, die rein exemplarisch eine sogenannte Honigwabenstruktur aufweisen kann, zumindest verringert oder unterbunden werden. Ebenso wird der Impulsaustausch der Strömung, der mit diesem "Pumpen" verbunden ist, zumindest reduziert. Das "Pumpen" einer Strömung in die Einlaufdichtung kann periodisch erfolgen bzw. auftreten.

Die vorliegende Erfindung wird im Folgenden anhand der beigefügten Zeichnungen, in welcher identische Bezugszeichen gleiche oder ähnliche Bauteile bezeichnen, exemplarisch erläutert. In den jeweils stark schematisch vereinfachten Figuren gilt:
- **Fig. 1**: zeigt in einer Aufsicht von radial außen ein Rotorschaufeldeckband mit zwei Dichtspitzen, einer Stützstruktur und mit darunter angeordneten Rotorschaufelblättern nach dem Stand der Technik;
- **Fig. 2**: zeigt den Verlauf einer Leckageströmung zwischen einem Rotorschaufelsdeckband mit zwei Dichtspitzen, einer Stützstruktur und einer gehäuseseitigen Einlaufdichtung nach dem Stand der Technik;
- **Fig. 3**: zeigt eine vereinfachte Darstellung des Verlustmechanismus an einem Rotorschaufeldeckband in einer Schnittdarstellung und in einer Aufsicht nach dem Stand der Technik;
- **Fig. 4**: zeigt in einer Aufsicht von radial außen ein erfindungsgemäßes Rotorschaufeldeckband mit zwei Dichtspitzen, einer Stützstruktur und mit darunter angeordneten Rotorschaufelblättern; und
- **Fig. 5**: zeigt eine vereinfachte Darstellung des erfindungsgemäßen Rotorschaufeldeckbands in einer Schnittdarstellung und in einer Aufsicht.

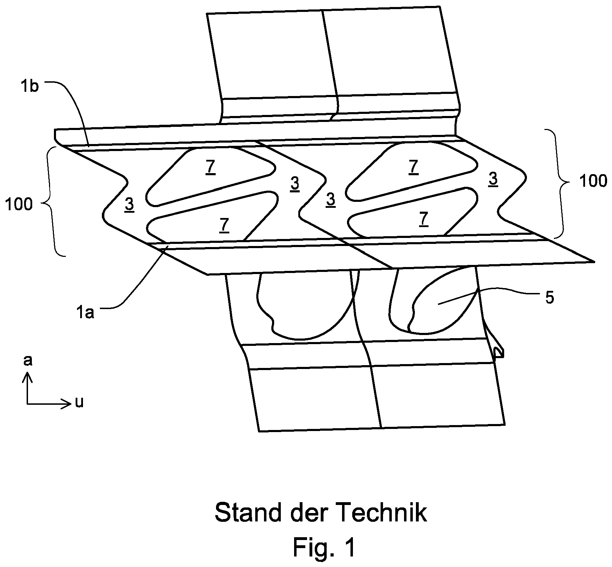

**Fig. 1** zeigt in einer Aufsicht von radial außen ein Rotorschaufeldeckband 100 mit zwei Dichtspitzen 1a, 1b, einer Stützstruktur 3 und mit darunter angeordneten Rotorschaufelblättern 5 nach dem Stand der Technik.

Das Rotorschaufeldeckband 100 (im Folgenden als Deckband 100 bezeichnet) weist zwei, in Umfangsrichtung u nacheinander angeordnete Abschnitte auf, die als Rotorschaufeldeckbandabschnitte bezeichnet werden können. Jeder Abschnitt ist einem darunter angeordneten Rotorschaufelblatt 5 zugeordnet. Das Deckband 100 kann separat oder einstückig mit dem Rotorschaufelblatt 5 gefertigt sein.

Das Deckband 100 weist Zwischenbereiche 7 auf, die von der Stützstruktur 3 umschlossen bzw. eingeschlossen sind. Die Stege der Stützstruktur 3 können als Versteifungsrippen bezeichnet werden. Die Anordnung, die Materialauswahl sowie die Dicke der Versteifungsrippen sollen eine möglichst hohe Steifigkeit des Deckbandes 100 bei gleichzeitiger Gewichtsminimierung ermöglichen.

Die dargestellte Anordnung der beiden Segmente des Deckbandes 100 und der Rotorschaufelblätter 5 setzen sich in Umfangsrichtung u weiter fort, sodass ein geschlossenes Laufrad bzw. Rotor einer Rotorstufe gebildet werden kann.

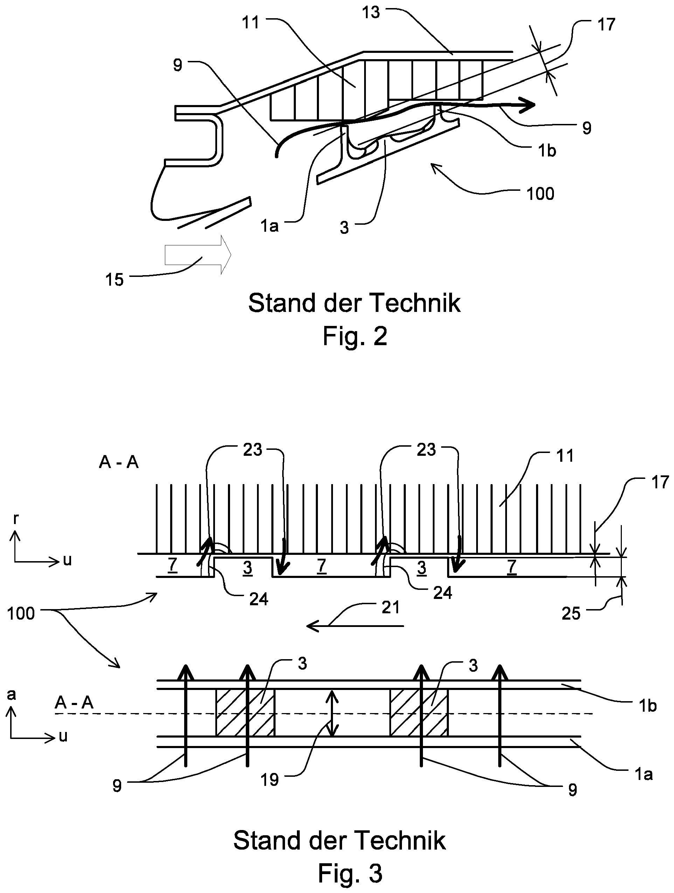

**Fig. 2** zeigt den Verlauf einer Leckageströmung 9 zwischen einem Deckband 100 mit zwei Dichtspitzen 1a, 1b, einer Stützstruktur 3 und einer gehäuseseitigen Einlaufdichtung 11 nach dem Stand der Technik.

Die Einlaufdichtung 11 ist an einem Gehäuse 13 gefestigt. Die Einlaufdichtung 11 kann wabenförmig ausgestaltet sein. Die Leckageströmung 9 strömt von stromauf, bezogen auf die Hauptdurchströmungsrichtung 15, nach stromab zwischen den Dichtspitzen 1a, 1b und der Einlaufdichtung 11 hindurch. Die Leckageströmung 9 kann als Spaltströmung bezeichnet werden. Der Spalt kann ausgebildet werden, indem die Dichtspitzen 1a, 1b bei Inbetriebnahme des Rotors bzw. der Strömungsmaschine sich in die Einlaufdichtung 11 einschneiden und ein Dichtspalt ausbilden. Für einen möglichst hohen Wirkungsgrad der Strömungsmaschine sollten die Strömungsverluste durch die Leckageströmung 9 minimiert werden. Dies kann insbesondere durch eine geringe Spaltbreite erreicht werden, aber auch durch möglichst geringe Strömungsverluste der Leckageströmung 9, die beispielsweise durch Strömungsablösungen, Turbulenzen und andere Strömungsphänomene hervorgerufen werden können (siehe Fig. 3).

Weiterhin ist der Abstand 17 zwischen der Oberkante der Stützstruktur 3 und der Einlaufdichtung 11 angegeben. Dieser Abstand 17 ist relevant hinsichtlich einer Strömung, die in Umfangsrichtung u, oberhalb der Stützstruktur 3 und zwischen den Dichtspitzen 1a, 1b verläuft. Diese Strömung wird durch die Oberflächenstruktur des Deckbandes 100 zwischen den Dichtspitzen 1a, 1b beeinflusst.

**Fig. 3** zeigt eine vereinfachte Darstellung des Verlustmechanismus an einem Rotorschaufeldeckband 100 in einer Schnittdarstellung und in einer Aufsicht nach dem Stand der Technik.

Die untere Ansicht in Fig. 3 ist eine schematisch stark vereinfachte Aufsicht auf das Deckband 100, ähnlich der Darstellung aus Fig. 1, jedoch ohne Darstellung des Rotorschaufelblatts und ohne weiterer Details. Die Leckageströmung 9 verläuft in der gezeigten Pfeilrichtung über die Dichtspitzen 1a, 1b hinweg (alternativ in einer um 180 Grad gedrehten Richtung). Die Stützstruktur 3 ist ebenfalls stark vereinfacht dargestellt, ohne die Stege der Stützstruktur 3 im Einzelnen darzustellen. Zusätzlich ist die innere Breite 19 des Deckbandes 100, in Axialrichtung a (Durchströmungsrichtung der Strömungsmaschine) gekennzeichnet, wobei die innere Breite 19 nicht die Breite der beiden Dichtspitzen 1a, 1b einbezieht (deshalb wird die Breite als die innere Breite 19 bezeichnet).

Die Schnittlinie A - A in der unteren Ansicht in Fig. 3 markiert die dargestellte Schnittebene der oberen Ansicht in Fig. 3. Die Drehrichtung 21 des Deckbandes 100 in Umfangsrichtung u gilt für beide Ansichten oben und unten der Fig. 3. Die Drehrichtung 21 kann mit der Formel cᵤ = ω * r näher beschrieben werden, wobei cᵤ die Umfangsgeschwindigkeit des Rotors ist, ω (Omega) die Winkelgeschwindigkeit und r der Radius des Deckbandes 100, bezogen auf die Drehachse des Rotors.

In der oberen Ansicht in Fig. 3 wird der Impulsaustausch zwischen dem Deckband 100 und der Einlaufdichtung 11 mittels der Strömung in die Einlaufdichtung 11 und aus der Einlaufdichtung 11 heraus schematisch vereinfacht durch die Strömungspfeile 23 dargestellt. Die Linien 24 deuten die gestaute Strömung an der Stützstruktur 3 bzw. den Versteifungsrippen der Stützstruktur 3 an. Das Deckband 100 bewegt sich in Richtung der Umfangsgeschwindigkeit cᵤ des Rotors, bezogen auf die Darstellung in Fig. 3 nach links. Aufgrund der Stützstruktur 3 und den Zwischenbereichen 7 staut sich die Strömung vor den Versteifungsrippen der Stützstruktur 3 an bzw. auf. Der Strömungsdruck erhöht sich entsprechend (bis zum Staudruck) und die Strömung weicht aus bzw. verzweigt sich in die Einlaufdichtung 11, entsprechend den dargestellten Strömungspfeilen 23. Dieses Ausweichen der Strömung in die Einlaufdichtung 11 kann als sogenanntes "Pumpen" bezeichnet werden. In der Einlaufdichtung 11 erhöht sich der Strömungsdruck ebenfalls aufgrund der in der Regel engen wabenförmigen Struktur in der Einlaufdichtung 11. Wenn sich das Deckband 100 in Richtung der Umfangsgeschwindigkeit cᵤ des Rotors weiterdreht, wird das zuvor in die Einlaufdichtung 11 eingeströmte Fluid nachfolgend in den Zwischenbereich 7 wieder in Richtung Deckband 100 zurückfließen und anschließend stark bis auf die Umfangsgeschwindigkeit cᵤ beschleunigt. Diese ständigen und sich wiederholenden Strömungen können noch verstärkt werden durch Turbulenzen, Strömungsabriße und andere Strömungsphänomene.

Die Strömungen 23 in die Einlaufdichtung 11 und aus der Einlaufdichtung 11 heraus können als Impulsaustausch der Strömung bezeichnet werden. Dieser permanente Impulsaustausch kann eine erhöhte Reibleistung in der Strömung verursachen und den Rotor abbremsen. Ferner können diese Strömungsphänomene zu einer sogenannten Ausmischung der Strömung führen, die die Entropie der Leckageströmung erhöhen und damit den Wirkungsgrad verschlechtern bzw. die Wirkungsgradverluste erhöhen.

Weiterhin ist in Fig. 3 noch die Höhe 25 der Rippen der Stützstruktur 3 angegeben und der Abstand 17 zwischen den Versteifungsrippen der Stützstruktur 3 und der Einlaufdichtung 11.

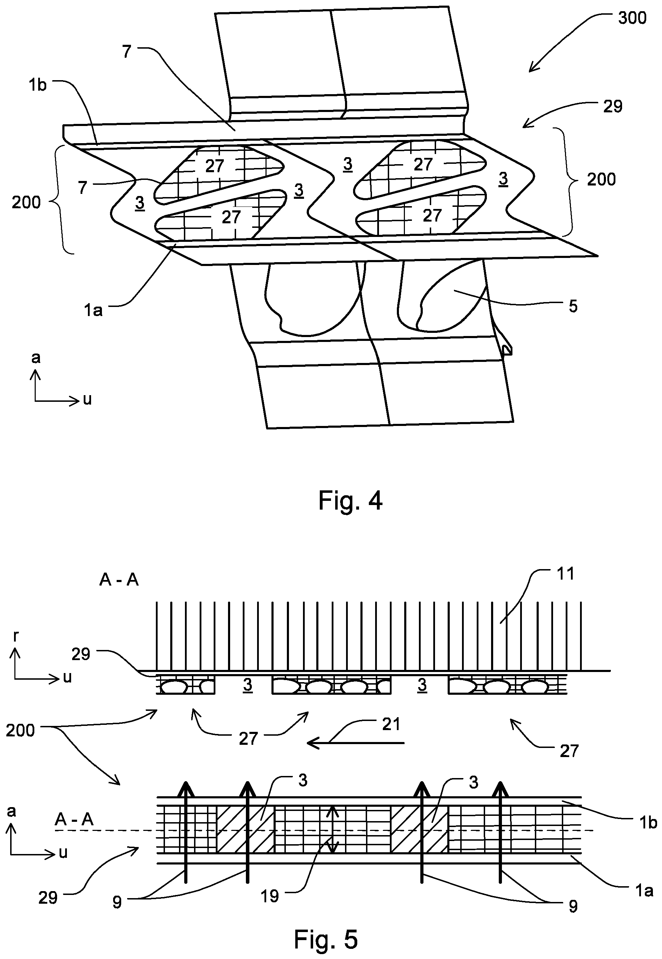

**Fig. 4** zeigt in einer Aufsicht von radial außen ein erfindungsgemäßes Rotorschaufeldeckband 200 mit zwei Dichtspitzen 1a, 1b, einer Stützstruktur 3 und mit einem darunter angeordneten Rotorschaufelblatt 5.

Das erfindungsgemäße Rotorschaufeldeckband 200 (im Folgenden als Deckband 200 bezeichnet) weist zusätzlich zu der Beschreibung des Deckbands 100 nach dem Stand der Technik (siehe Fig. 1) noch Struktursegmente 27 auf, die in die Zwischenbereiche 7 eingefügt wurden.

Die radial außen angeordnete Oberfläche 29 der Stützstruktur 3 und der Struktursegmente 27 bilden eine im Wesentlichen planare Oberfläche 29 aus (siehe Fig. 5).

**Fig. 5** zeigt eine vereinfachte Darstellung des erfindungsgemäßen Rotorschaufeldeckbands 200 in einer Schnittdarstellung und in einer Aufsicht.

Gegenüber der Darstellung aus Fig. 3 wurden in die Zwischenbereiche 7 die Struktursegmente 27 eingefügt. Dadurch treten nicht die zur Fig. 3 beschriebenen Strömungsphänomene wie beispielsweise das sogenannte Pumpen der Strömung in die Einlaufdichtungen 11 und aus den Einlaufdichtungen 11 heraus auf. Dadurch kann der Wirkungsgrad des Rotors, wie es bereits oben ausführlich beschrieben wurde, gegenüber der Ausführung nach dem Stand der Technik erhöht werden.

Die Struktursegmente 27 weisen optional innere Hohlstrukturen auf, die zur Gewichtsreduzierung des Deckbandes 200 beitragen können.

Weiterhin ist in Fig. 5 die radial nach außen angeordnete Oberfläche 29 der Stützstruktur 3 dargestellt.

### Bezugszeichenliste

- 100: Rotorschaufeldeckband nach dem Stand der Technik; Deckband
- 200: erfindungsgemäßes Rotorschaufeldeckband
- 300: Rotorschaufel
- 1a, 1b: Dichtspitze
- 3: Stütz struktur
- 5: Rotorschaufelblatt
- 7: Zwischenbereich
- 9: Leckageströmung
- 11: Einlaufdichtung
- 13: Gehäuse
- 15: Hauptdurchströmungsrichtung
- 17: Abstand zwischen Stützstruktur und Einlaufdichtung
- 19: innere Breite des Deckbandes
- 21: Umfangsgeschwindigkeit des Rotors; cᵤ
- 23: Strömung in die Einlaufdichtung und aus der Einlaufdichtung heraus
- 24: gestaute Strömung an der Stützstruktur
- 25: Rippenhöhe
- 27: Struktursegment
- 29: radial nach außen angeordnete Oberfläche der Stützstruktur

## Patentansprüche

1. Rotorschaufeldeckband (200) einer Rotorschaufel (300) für eine Strömungsmaschine, umfassend eine oder mehrere
zum Einlaufen in eine Einlaufdichtung eines Gehäuses der Strömungsmaschine bestimmte Dichtspitzen (1a, 1b) und eine an die eine oder mehreren Dichtspitzen (1a, 1b) angrenzende Stützstruktur (3), wobei die Stützstruktur (3) wenigstens einen Zwischenbereich (7) aufweist, in dem ein Struktursegment (27) angeordnet ist, wobei die nach radial außen angeordnete Oberfläche (29) der Stützstruktur (3) und des Struktursegments (27) eine im Wesentlichen planare Oberfläche (29) mit einer umfangssymmetrischen Oberflächenkontur ausbildet.

2. Rotorschaufeldeckband (200) nach Anspruch 1, wobei die nach radial außen weisende Oberfläche des Rotorschaufeldeckbandes außerhalb der einen oder mehreren Dichtspitzen (1a, 1b) einschließlich der genannten im Wesentlichen planaren Oberfläche (29) glatt, konturlos und/oder geschlossen ist.

3. Rotorschaufeldeckband (200) nach Anspruch 1 oder 2, wobei die Stützstruktur (3) und das Struktursegment (27) dasselbe Material umfassen und insbesondere integral miteinander, beispielsweise gemeinsam integral additiv, ausgebildet sind.

4. Rotorschaufeldeckband (200) nach Anspruch 1 oder 2, wobei die Stützstruktur (3) aus einem ersten Material hergestellt ist oder ein erstes Material aufweist, und wobei das Struktursegment (27) aus einem zweiten Material hergestellt ist oder ein zweites Material aufweist, wobei das erste Material und das zweite Material unterschiedlich sind.

5. Rotorschaufeldeckband (200) nach einem der vorangegangenen Ansprüche, wobei die Stützstruktur (3) wenigstens zwei Zwischenbereiche (7) aufweist, in denen zwei Struktursegmente (27) angeordnet sind.

6. Rotorschaufeldeckband (200) nach einem der vorangegangenen Ansprüche, wobei die Dichtspitze (1a, 1b) und/oder die Stützstruktur (3) massiv ausgebildet ist bzw. sind.

7. Rotorschaufeldeckband (200) nach einem der vorangegangenen Ansprüche, umfassend wenigstens zwei Dichtspitzen (1a, 1b), wobei die Stützstruktur (3) zwischen den Dichtspitzen (1a, 1b) angeordnet ist.

8. Rotorschaufeldeckband (200) nach einem der vorangegangenen Ansprüche, wobei die Stützstruktur (3) rippenförmig ausgebildet ist.

9. Rotorschaufeldeckband (200) nach einem der vorangegangenen Ansprüche, wobei wenigstens ein Struktursegment (27) eine Hohlstruktur, insbesondere eine geschlossene Hohlstruktur, aufweist und/oder eine geringere Dichte als die Stützstruktur (3) aufweist.

10. Rotorschaufeldeckband (200) nach einem der vorangegangenen Ansprüche, wobei die Dichtspitze (1a, 1b) eine senkrecht zur Umfangsrichtung ausgerichtete, konstante Breite über dem Umfang aufweist, und/oder wobei eine zweite Dichtspitze (1b) stromab einer ersten Dichtspitze (1a) angeordnet ist und die
zweite Dichtspitze (1b) gegenüber der ersten Dichtspitze (1a) radial versetzt nach außen angeordnet ist, wobei die erste Dichtspitze (1a) und die zweite Dichtspitze (1b) vorzugsweise in ihrer Längsausrichtung im Wesentlichen parallel zueinander angeordnet sind.

11. Rotorschaufeldeckband (200) nach einem der vorangegangenen Ansprüche, wobei die nach radial außen angeordnete Oberfläche (29) der Stützstrukturen (3) und der weiteren Struktursegmente (27) und/oder die zwischen der ersten Dichtspitze (1a) und der zweiten Dichtspitze (1b) nach radial außen angeordnete Oberfläche des Rotorschaufeldeckbands (200) eine im wesentlichen planare Oberfläche (29) über dem gesamten Umfang ausbildet.

12. Rotorschaufel (300) für eine Strömungsmaschine, umfassend ein Rotorschaufeldeckband (200) nach einem der Ansprüche 1 bis 11.

13. Verfahren zum Herstellen eines Rotorschaufeldeckbands (200) nach einem der Ansprüche 1 bis 11, mit den folgenden Schritten:
- Bereitstellen eines Rotorschaufeldeckbands (200), umfassend wenigstens eine Dichtspitze (1a, 1b) und eine an die Dichtspitze (1a, 1b) angrenzende Stützstruktur (3), wobei die Stützstruktur (3) wenigstens einen Zwischenbereich (7) aufweist;
- Herstellen, insbesondere mittels eines generativen Fertigungsverfahrens, wenigstens eines Struktursegments (27), vorzugsweise aller Struktursegmente (27), das bzw. die jeweils in einem Zwischenbereich (7) der Stützstruktur (3) angeordnet ist bzw. sind, so dass beim hergestellten Rotorschaufeldeckband (200) eine nach radial außen angeordnete Oberfläche (29) der Stützstruktur (3) und der Struktursegmente (27) eine im wesentlichen planare Oberfläche (29) ausbildet.

14. Verfahren zum Herstellen eines Rotorschaufeldeckbands (200) nach einem der Ansprüche 1 bis 11 mittels eines generativen Fertigungsverfahrens in einem Fertigungsschritt.

15. Verfahren zum Herstellen einer Rotorschaufel (300) für eine Strömungsmaschine mittels eines generativen Fertigungsverfahrens in einem Fertigungsschritt, wobei die Rotorschaufel (300) ein Rotorschaufeldeckband (200) nach einem der Ansprüche 1 bis 11 umfasst.

## Claims

1. Rotor blade shroud (200) of a rotor blade (300) for a turbomachine, comprising one or more sealing tips (1a, 1b) intended to run into an inlet seal of a housing of the turbomachine and a support structure (3) adjoining the one or more sealing tips (1a, 1b), wherein the support structure (3) has at least one intermediate region (7) in which a structure segment (27) is arranged, wherein the radially outwardly arranged surface (29) of the support structure (3) and of the structure segment (27) forms a substantially planar surface (29) having a circumferentially symmetrical surface contour.

2. Rotor blade shroud (200) according to claim 1, wherein the radially outwardly faci ng surface of the rotor blade shroud outside the one or more sealing tips (1a, 1 b), including the above-mentioned substantially planar surface (29), is smooth, contourless and/or closed.

3. Rotor blade shroud (200) according to either claim 1 or claim 2, wherein the support structure (3) and the structure segment (27) comprise the same material and in particular are formed integrally, for example jointly integrally additively, with one another.

4. Rotor blade shroud (200) according to either claim 1 or claim 2, wherein the support structure (3) is made from a first material or has a first material, and wherein the structure segment (27) is made from a second material or has a second material, wherein the first material and the second material are different.

5. Rotor blade shroud (200) according to any of the preceding claims, wherein the support structure (3) has at least two intermediate regions (7) in which two structure segments (27) are arranged.

6. Rotor blade shroud (200) according to any of the preceding claims, wherein the sealing tip (1a, 1b) and/or the support structure (3) is/are solid.

7. Rotor blade shroud (200) according to any of the preceding claims, comprising at least two sealing tips (1a, 1b), wherein the support structure (3) is arranged between the sealing tips (1a, 1b).

8. Rotor blade shroud (200) according to any of the preceding claims, wherein the support structure (3) is rib-shaped.

9. Rotor blade shroud (200) according to any of the preceding claims, wherein at least one structure segment (27) has a hollow structure, in particular a closed hollow structure, and/or has a lower density than the support structure (3).

10. Rotor blade shroud (200) according to any of the preceding claims, wherein the sealing tip (1a, 1b) has a constant width over the circumference, which width is oriented perpendicularly to the circumferential direction, and/orwherein a second sealing tip (1 b) is arranged downstream of a first sealing tip (1 a) and the second sealing tip (1 b) is arranged radially offset outward with respect to the first sealing tip (1a), wherein the first sealing tip (1a) and the second sealing tip (1b) are preferably arranged substantially parallel to one another in their longitudinal alignment.

11. Rotor blade shroud (200) according to any of the preceding claims, wherein the radially outwardly arranged surface (29) of the support structures (3) and of the further structure segments (27) and/or the radially outwardly arranged surface of the rotor blade shroud (200) between the first sealing tip (1a) and the second sealing tip (1 b) forms a substantially planar surface (29) over the entire circumference.

12. Rotor blade (300) for a turbomachine, comprising a rotor blade shroud (200) according to any of claims 1 to 11.

13. Method for producing a rotor blade shroud (200) according to any of claims 1 to 11, comprising the following steps:
- providing a rotor blade shroud (200), comprising at least one sealing tip (1a, 1b) and a support structure (3) adjoining the sealing tip (1a, 1b), wherein the support structure (3) has at least one intermediate region (7);
- producing, in particular by means of a rapid manufacturing process, at least one structure segment (27), preferably all structure segments (27), which is/are each arranged in an intermediate region (7) of the support structure (3), such that in the produced rotor blade shroud (200) a radially outwardly arranged surface (29) of the support structure (3) and of the structure segments (27) forms a substantially planar surface (29).

14. Method for producing a rotor blade shroud (200) according to any of claims 1 to 11 by means of a rapid manufacturing process in one manufacturing step.

15. Method for producing a rotor blade (300) for a turbomachine by means of a rapid manufacturing process in one manufacturing step, wherein the rotor blade (300) comprises a rotor blade shroud (200) according to any of claims 1 to 11.

## Revendications

1. Carénage d'aube de rotor (200) d'une aube de rotor (300) pour une turbomachine, comprenant une ou plusieurs pointes d'étanchéité (1a, 1 b) destinées à déboucher dans un joint d'entrée d'un carter de la turbomachine et une structure de support (3) adjacente à une ou plusieurs pointes d'étanchéité (1a, 1b), la structure de support (3) présentant au moins une région intermédiaire (7) dans laquelle est agencé un segment de structure (27), la surface disposée radialement vers l'extérieur (29) de la structure de s upport (3) et du segment de structure (27) formant une surface sensiblement plane (29) avec un contour de surface circonférentiellement symétrique.

2. Carénage d'aube de rotor (200) selon la revendication 1, la surface orientée radialement vers l'extérieur du carénage d'aube de rotor étant lisse, sans contouret/ou fermée à l'extérieur de la ou des pointes d'étanchéité (1a, 1b), y compris ladite surface sensiblement plane (29).

3. Carénage d'aube de rotor (200) selon la revendication 1 ou 2, la structure de support (3) et le segment de structure (27) comprenant le même matériau et en particulier étant formés d'un seul tenant l'un avec l'autre, par exemple conjointement d'un seul tenant de manière additive.

4. Carénage d'aube de rotor (200) selon la revendication 1 ou 2, la structure de support (3) étant fabriquée d'un premier matériau ou présentant un premiermatériau, et le segment de structure (27) étant fabriqué d'un second matériau ou comprenant un second matériau, le premier matériau et le second matériau étant différents.

5. Carénage d'aube de rotor (200) selon l'une des revendications précédentes, la structure de support (3) présentantau moins deuxrégions intermédiaires (7) dans lesquelles deux segments de structure (27) sont disposés.

6. Carénage d'aube de rotor(200) selon l'une des revendications précédentes, la pointe d'étanchéité (1a, 1b) et/ou la structure de support (3) étant pleine(s).

7. Carénage d'aube de rotor (200) selon l'une des revendications précédentes, comprenant au moins deux pointes d'étanchéité (1a, 1b), la structure de support (3) étant disposée entre les pointes d'étanchéité (1a, 1 b).

8. Carénage d'aube de rotor (200) selon l'une des revendications précédentes, la structure de support (3) étant formée en forme de nervure.

9. Carénage d'aube de rotor (200) selon l'une des revendications précédentes, au moins un segment de structure (27) présentant une structure creuse, en particulier une structure creuse fermée, et/ou présentant une densité inférieure à celle de la structure de support (3).

10. Carénage d'aube de rotor (200) selon l'une des revendications précédentes, la pointe d'étanchéité (1a, 1b) présentant une largeur constante sur la circonférence et perpendiculaire à la direction circonférentielle, et/ou
une seconde pointe d'étanchéité (1 b) étant disposée en aval d'une première pointe d'étanchéité (1a) et la seconde pointe d'étanchéité (1 b) étant disposée radialement décalée vers l'extérieur par rapport à la première pointe d'étanchéité (1a), la première pointe d'étanchéité (1a) et la seconde pointe d'étanchéité (1b) étant de préférence disposées sensiblement parallèles l'une à l'autre dans leur alignement longitudinal.

11. Carénage d'aube de rotor (200) selon l'une des revendications précédentes, la surface disposée radialement vers l'extérieur (29) des structures de support (3) et des autres segments de structure (27) et/ou la surface du carénage d'aube de rotor (200) disposée radialement vers l'extérieur entre la première pointe d'étanchéité (1a) et la seconde pointe d'étanchéité (1 b) formant une surface sensiblement plane (29) sur toute la circonférence.

12. Aube de rotor (300) pour une turbomachine, comprenant un carénage d'aube de rotor (200) selon l'une des revendications 1 à 11.

13. Procédé de fabrication d'un carénage d'aube de rotor (200) selon l'une des revendications 1 à 11, comportant les étapes suivantes :
- fourniture d'un carénage d'aube de rotor (200) comprenant au moins une pointe d'étanchéité (1a, 1 b) et une structure de support (3) adjacente à la pointe d'étanchéité (1a, 1b), la structure de support (3) présentant au moins une région intermédiaire (7) ;
- fabrication d'au moins un segment de structure (27), de préférence de tous les segments de structure (27), qui est ou sont respectivement disposés dans une région intermédiaire (7) de la structure de support (3), en particulier au moyen d'un procédé de production génératif, de telle sorte que, lors de la production du carénage d'aube de rotor(200), une surface disposée radialement vers l'extérieur (29) de la structure de support (3) et des segments de structure (27) forme une surface essentiellement plane (29).

14. Procédé de fabrication d'un carénage d'aube de rotor (200) selon l'une des revendications 1 à 11 au moyen d'un procédé de production génératif pendant une étape de production.

15. Procédé de fabrication d'une aube de rotor (300) pour une turbomachine au moyen d'un procédé de production génératif pendant une étape de production, l'aube de rotor (300) comprenant un carénage d'aube de rotor (200) selon l'une des revendications 1 à 11.
